# FASCICULE DE BREVET EUROPEEN

(11) **EP 1 766 218 B1**
(45) Date de publication et mention de la délivrance du brevet: **06.02.2008**
(21) Numéro de dépôt: 05778768.1
(22) Date de dépôt: 23.06.2005
(51) Int. Cl.: F02K 1/34

(54) **REACTEUR D'AVION EQUIPE D'UN DISPOSITIF DE REDUCTION DE BRUIT DES JETS PROPULSIFS**
FLUGZEUGSTRAHLENTRIEBWERK MIT VORRICHTUNG ZUR REDUZIERUNG DES VORTRIEBSSTRAHLLÄRMS
AIRCRAFT JET ENGINE PROVIDED WITH A DEVICE FOR REDUCING PROPULSION JET NOISE

(30) Priorité: 05.07.2004 FR 0407444
(43) Date de publication de la demande: 28.03.2007
(73) Titulaire: CENTRE NATIONAL DE LA RECHERCHE SCIENTIFIQUE (CNRS), 75794 Paris Cedex 16 (FR); UNIVERSITE DE POITIERS, 86034 Poitiers Cedex (FR)
(72) Inventeur: BONNET, Jean-Paul, F-86000 POITIERS (FR); DELVILLE, Joel, F-86000 Poitiers (FR); JORDAN, Peter, F-79120 ROM (FR); LAURENDEAU, Estelle, F-86580 Vouneuil-Sous-Biard (FR)
(74) Mandataire: Breese, Pierre
(86) Numéro de dépôt international: PCT/FR2005/001588
(87) Numéro de publication internationale: WO 2006/013243

(56) Documents cités:
- FR-A- 1 195 859
- US-A- 3 599 749

## Description

La présente invention se rapporte au domaine des réacteurs d'avions, et notamment des dispositifs permettant la réduction des bruits générés par les réacteurs d'avions.

Les nuisances sonores provenant d'un avion ont lieu principalement durant les phases de décollage et d'approche, et se situent notamment au niveau du réacteur de l'avion et du jet en sortie de celui-ci.

Du fait des nuisances croissantes imposées aux riverains d'aéroports liés aux bruits générés par les moteurs, lesquels sont exacerbées par l'augmentation du trafic, la limitation des bruits au décollage ou à l'atterrissage constitue aujourd'hui, mais également à l'avenir une voie de recherche capitale.

En effet, le passage au Chapitre 4 de l'OACI (Organisation de l'Aviation Civile Internationale) prévoit d'imposer une diminution de 10 dB par rapport au Chapitre 3 dès le 1^{er} janvier 2006.

A ce jour, aucune méthode effective n'est disponible. Il existe bien des méthodes reposant principalement sur le mélange des jets propulsifs à la sortie des réacteurs d'avions, les jets propulsifs étant composés d'un jet primaire chaud sortant de la tuyère du réacteur, et d'un flux secondaire s'écoulant entre la paroi externe de la tuyère et la paroi interne du réacteur, mais elles restent limitées en vue de la réduction des quelques décibels demandés.

En particulier, on connaît de l'art antérieur des méthodes passives consistant en une modification de la géométrie de la lèvre du jet à manipuler. Ces dispositifs, tels que les mélangeurs à lobes et les volets miniatures, sont cependant très difficilement amovibles.

Parmi les méthodes actives de contrôle du mélange adaptées aux jets subsoniques ou supersoniques, on trouve les actionneurs pneumatiques ou mécaniques. Cependant, la région de réceptivité maximale étant située à la lèvre de sortie du jet, les échelles caractéristiques de l'écoulement sont donc très petites et à très hautes fréquences. Ces contraintes, ajoutées au fait que la région concernée est difficilement accessible dans le cas des réacteurs d'avions commerciaux font que de tels dispositifs de contrôle de jets sont mal adaptés à une mise en oeuvre in situ.

Une méthode, actuellement en développement à la NASA avec la société Boeing, consiste à utiliser des chevrons placés aux bords de fuite des sorties des moteurs. Cependant, l'utilisation de tels chevrons présente un certain nombre d'inconvénients.

En particulier, du fait de la masse ajoutée au moteur associée à leur caractère permanent, les chevrons imposent une perte de poussée de l'ordre de 0,3% par moteur, entraînant alors une réduction des performances, voire une surconsommation pendant toute à durée de la croisière, leur action dans cette phase étant pourtant inutile.

En outre, les chevrons physiques offrent un équipement « figé » dans sa géométrie : les chevrons sont donc configurés pour atteindre un niveau de performances satisfaisant pour tous les régimes de l'avion. Ils offrent un compromis non systématiquement optimisé pour tous les régimes. En particulier le régime moteur étant très différent selon la phase du vol, selon qu'il s'agit d'un décollage, d'une approche ou d'un atterrissage d'un avion, la géométrie des chevrons devrait être adaptée au régime concerné.

Afin de pallier ce dernier inconvénient, d'autres méthodes, appelées méthodes de rétractation partielle, sont en cours de développement. Parmi ces méthodes, lesquelles consistent à modifier les angles de pénétration des chevrons, une approche consiste à utiliser des matériaux à mémoire de forme. Cependant, de telles méthodes restent relativement complexes à mettre en oeuvre et peu adaptatives.

On connaît par ailleurs par le document FR-A-1 195 859 une tuyère dans laquelle des jets auxiliaires sont éjectés au bord de fuite de la tuyère, en des points répartis autour du jet principal. Ces jets auxiliaires sont inclinés en direction de l'axe de la tuyère et ont en outre une composante tangentielle, de sorte qu'ils peuvent converger deux à deux. Cette composante tangentielle est toutefois très faible, les jets convergeant à grande distance de la sortie de la tuyère, typiquement à une distance indiquée comme nécessaire de l'ordre de cinq fois le diamètre de la tuyère.

Le document US-A-6 571 549 décrit également un procédé de réduction du bruit engendré par une tuyère par éjection de jets auxiliaires pulsés périphériques. Ces jets sont inclinés par rapport à l'axe de la tuyère, mais dans des plans radiaux, sans composante tangentielle. Ce document ne décrit donc pas de jets convergents.

Le document EP-A-1 493 912 décrit la combinaison d'un système à chevrons fluides et d'un écran thermique configurable. Comme dans le document précédent, les jets auxiliaires des chevrons fluides sont inclinés par rapport à l'axe du jet principal, mais aucune composante tangentielle n'est prévue. Le dispositif décrit dans ce document nécessite l'ajout de pièces mécaniques conduisant ainsi à un moteur plus lourd et délicat à mettre en oeuvre.

La présente invention entend donc remédier aux inconvénients de l'art antérieur en proposant un dispositif de réduction du bruit, simple de mise en oeuvre, et n'offrant que très peu de masse ajoutée.

La présente invention a également pour but de proposer un dispositif de réduction du bruit adaptable en fonction du régime moteur, celui-ci étant différent suivant qu'il s'agit d'une phase de décollage, d'approche ou d'atterrissage. En particulier, le dispositif selon l'invention présente l'avantage de ne pas fonctionner durant la phase de croisière pour laquelle un tel dispositif est inutile, et donc de ne pas augmenter la consommation.

La présente invention a également pour but d'offrir un dispositif de réduction du bruit pouvant être monté sur les équipements de moteur déjà en service et ce, sans modification majeure de l'existant.

Pour ce faire, la présente invention concerne un réacteur d'avion comprenant une tuyère éjectant un jet propulsif, ou comportant la confluence de deux jets propulsifs, ladite tuyère présentant une ou deux couronnes de sortie qui comportent des moyens de perturbation dudit ou desdits jets primaires constitués au moins d'une paire de conduits par lesquels sont éjectés des jets d'air, lesdits conduits débouchant en sortie de ladite tuyère, les conduits de chaque paire étant disposés convergents l'un par rapport à l'autre pour générer en sortie un triangle d'interaction des jets d'air, les conduits de chaque paire convergeant l'un vers l'autre en sortie de ladite tuyère selon un angle de convergence au sommet compris entre 40 degrés et 70 degrés, et de préférence un angle de convergence de l'ordre de 60 degrés.

Les phénomènes en jeu sont donc à beaucoup plus petite échelle, d'environ un ordre de grandeur, que dans le document FR-A-1 195 859, puisque la convergence des jets se produit à une distance de l'ordre de la moitié ou du cinquième du diamètre de la tuyère dans l'invention, contre cinq fois le diamètre dans le document précité.

Il semblerait qu'à cette échelle, on obtiendrait à la fois les effets des chevrons fluides et de l'écran thermique du document EP-A-1 493 912.

Avantageusement, les conduits sont disposés sur la couronne de sortie pour présenter par rapport à l'axe du jet primaire un angle de pénétration compris entre 8 degrés et 40 degrés, et de préférence un angle de pénétration de l'ordre de 20 à 35 degrés.

Avantageusement, les moyens de perturbation comprennent 1 à 24 paires de conduits.

Avantageusement, les paires de conduits sont réparties sur la couronne de sortie de sorte que le conduit convergeant dans un sens, juxtapose un conduit, de convergence opposée, de la paire de conduits adjacente.

Avantageusement, les conduits consistent en des tubulures réparties sur la paroi extérieure de ladite couronne de sortie.

Avantageusement les conduits sont constitués de canaux intégrés dans l'épaisseur de la couronne de sortie.

Avantageusement, les conduits sont reliés à une alimentation d'air comprimé via un conduit d'amenée d'air, l'alimentation étant réalisée de préférence au niveau de la partie haute pression dudit réacteur. Selon un mode de réalisation avantageux de l'invention, le conduit d'amenée d'air d'un conduit d'une paire constitue le conduit d'amenée d'air du conduit de la paire adjacente et présentant une convergence opposée.

Avantageusement, les conduits présentent un diamètre de 20 à 50 fois plus petit que celui de la tuyère en sortie.

Avantageusement, les jets de sortie convergent par rapport à l'axe dudit jet primaire selon un angle compris entre 8 degrés et 40 degrés.

Avantageusement, les jets d'air consistent en des jets d'air dont le débit est contrôlé.

Avantageusement, les paires de conduits pourront être réparties symétriquement ou non sur la couronne de sortie de ladite tuyère.

Dans un mode de réalisation particulier, les paires de conduit peuvent être réparties seulement sur une demi couronne, dans la partie basse, afin de réduire les débits requis; cette configuration permet de réduire les bruits perçus dans les zones situées en dessous de l'avion; la dissymétrie engendrée sur le jet propulsif peut aussi contribuer à augmenter la portance par création d'une poussée verticale, permettant ainsi de réduire les temps de montée de l'avion.

Dans un mode de réalisation particulier, des moyens sont prévus pour entraîner en rotation sur eux-mêmes les jets d'air éjectés par lesdits conduits. Il peut s'agir par exemple d'aubes fixes ou d'une hélice folle montées à l'intérieur ou à la sortie des conduits, de rainures hélicoïdales formées à la surface intérieure des conduits, ou encore des conduits eux-mêmes qui auraient une forme hélicoïdale.

Egalement dans un mode de réalisation particulier, le rapport massique entre le débit des jets d'air éjectés par lesdits conduits et celui du jet propulsif est compris entre environ 0,3% et 2%. Il s'agit d'un débit faible tout à fait compatible avec un fonctionnement convenable du moteur.

La présente invention se rapporte également à un avion comportant des réacteurs tels que décrits précédemment.

On comprendra mieux l'invention à l'aide de la description, faite ci-après à titre purement explicatif, d'un mode de réalisation de l'invention, en référence aux dessins annexés dans lesquels :
- la figure 1 illustre une vue en perspective d'une sortie de tuyère équipant un réacteur d'avion selon l'invention
- la figure 2 illustre le fonctionnement de l'invention ; et
- la figure 3 est un diagramme des vitesses radiales en fonction de la distance à la sortie de la tuyère.

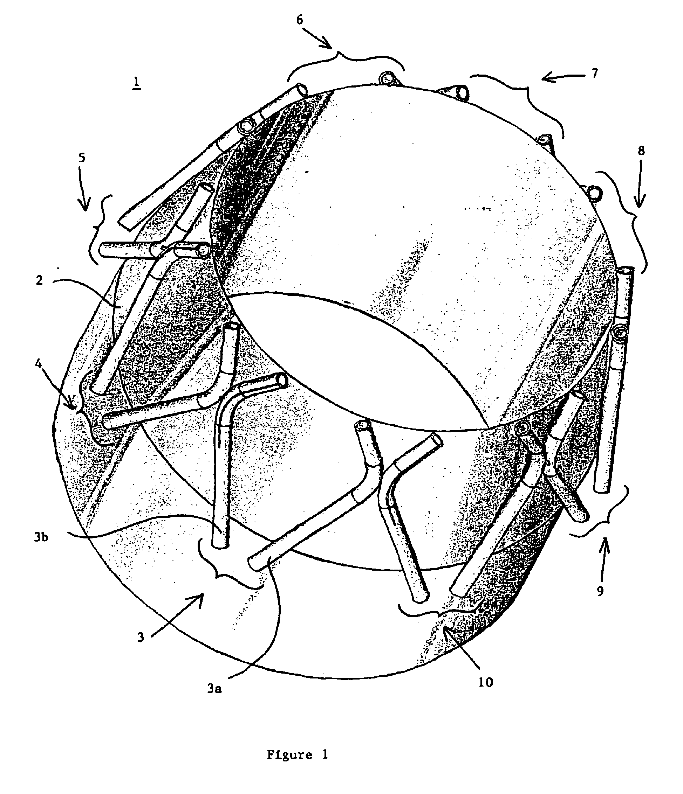

La figure 1 illustre une sortie de tuyère (1) d'un réacteur d'avion, munie d'un dispositif permettant de réduire le bruit provoqué par les jets propulsifs du réacteur, notamment lors des phases de décollage ou d'approche de l'avion.

Pour ce faire, ladite sortie de tuyère (1) est constituée, au niveau de sa sortie, d'une couronne de sortie (2) comportant des jets de contrôle.

De préférence, ladite couronne de sortie (2) comporte des jets qui convergent par rapport à l'axe du jet propulsif selon un angle de l'ordre de 20 à 35 degrés.

Ladite tuyère (1) comporte en outre des moyens de perturbation (3 à 10) destinés à perturber le jet propulsif à la sortie de ladite tuyère (1).

Lesdits moyens de perturbation (3 à 10) consistent en des paires de tubulures (3a, 3b, ..., 10a, 10b) réparties sur la paroi extérieure de ladite couronne (2) et présentant un orifice de sortie au niveau de l'extrémité libre de ladite couronne (2). Bien entendu, il s'agit ici d'un exemple de configuration. Il est bien entendu évident que lesdites paires de tubulures peuvent être également intégrées dans l'épaisseur de ladite couronne (2).

Lesdites tubulures sont avantageusement reliées à la partie haute pression du réacteur via un conduit d'amenée d'air (non représenté). Ainsi, des jets d'air comprimé sont envoyés vers les tubulures pour être éjectés en sortie de ladite tuyère (1).

Avantageusement, la vitesse de l'air comprimé est sensiblement identique à la vitesse des jets propulsifs et le rapport massique entre le débit des jets d'air éjectés par lesdits conduits et celui du jet propulsif est compris entre environ 0,3% et 2%.

Les tubulures (3a, 3b, ...,10a, 10b) de chaque paire, avantageusement coudées, sont disposées sur la couronne de sortie (2) de façon à faire face l'une avec l'autre.

Les tubulures de chaque paire sont disposées l'une par rapport à l'autre de sorte que les jets d'air comprimés, à la sortie desdites tubulures, génèrent des triangles d'interaction fluide selon un angle de convergence de l'ordre de 60 degrés.

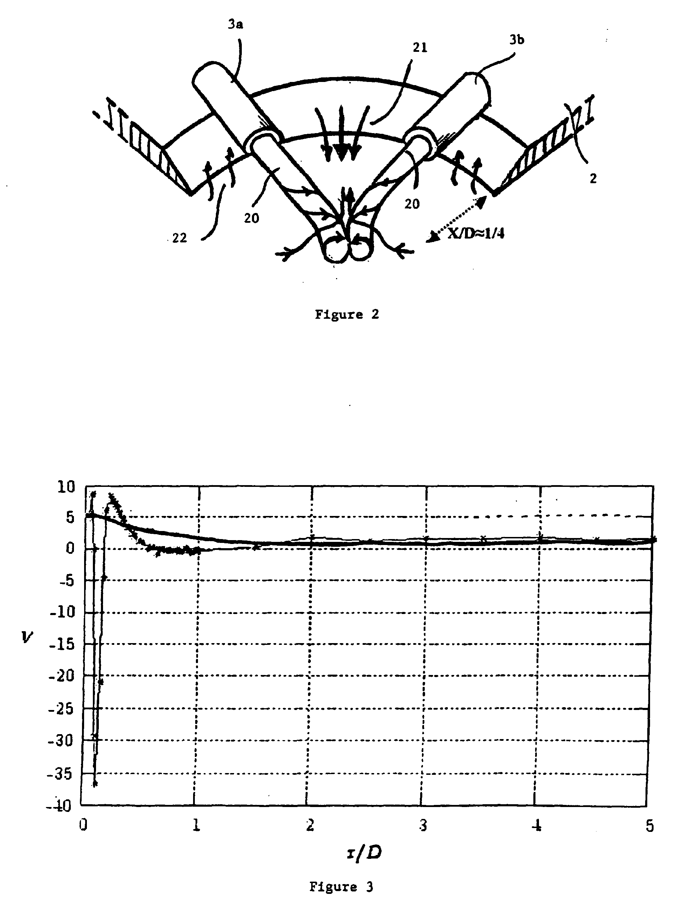

On voit à la figure 2 que l'inclinaison des tubulures 3 donne aux jets 20 qui en sont issus une composante de vitesse tangentielle qui, du fait de l'interaction avec le jet propulsif, provoque une rotation des jets 20 sur eux-mêmes, en sens inverse pour deux jets convergents. Cette rotation peut être favorisée par des moyens tels que ceux mentionnés ci-dessus. Par ailleurs, l'angle de convergence précité amène les deux jets convergents à se rencontrer à courte distance, de l'ordre du quart du diamètre de la tuyère.

Lorsque la réalisation concerne la couronne séparant le jet extérieur froid et le jet central chaud, la rotation des jets 20 entraîne de l'air froid extérieur 21 à l'intérieur du jet propulsif entre les jets convergents, de l'air chaud 22 ressortant au contraire à l'extérieur des jets 20.

Il en résulte une homogénéisation des températures dès la sortie de la tuyère, pouvant contribuer à la réduction du bruit généré par cette tuyère. On peut également penser qu'il se produit un effet d'écran thermique, également favorable à la réduction du bruit rayonné.

On voit à la figure 3 la vitesse radiale en fonction de la distance à la sortie de la tuyère, exprimée ici par son rapport au diamètre de la tuyère. La présence d'une composante de vitesse radiale (perpendiculaire à l'axe du jet propulsif) négative égale à environ 40% de la vitesse du jet propulsif montre l'importance de l'entraînement du fluide froid dans le coeur du jet propulsif chaud. Cet entraînement se produit très près de la sortie de la tuyère, typiquement dans le premier quart de diamètre. Cette forte pénétration et sa localisation près de la sortie du jet sont liées à l'angle choisi pour la convergence des jets.

Par ailleurs, afin d'augmenter encore la perturbation du jet primaire, lesdits « triangles fluides » ainsi obtenus sont inclinés sur l'axe du jet primaire avec un angle, appelé angle de pénétration, compris entre 8 degrés (faible pénétration) et 40 degrés (forte pénétration).

Selon un mode de réalisation de l'invention, une telle inclinaison est obtenue du fait même de la convergence de la paroi extérieure de la couronne de sortie (2) de ladite tuyère (1), celle-ci convergeant avantageusement par rapport à l'axe dudit jet primaire selon un angle compris entre 8 degrés et 40 degrés.

Selon un autre mode de réalisation, cette inclinaison est obtenue par l'orientation des conduits intégrés dans l'épaisseur de la couronne.

Selon un autre mode de réalisation, l'inclinaison de tout ou partie des paires de jets peut être dirigée vers le jet extérieur.

Cependant, cette inclinaison pourra être réajustée, voire directement obtenue, par construction mécanique en fonction de la perturbation souhaitée, et par conséquent de la force de pénétration nécessaire.

Concernant la disposition des tubulures au niveau de la couronne de sortie (2), lesdites paires de tubulures sont réparties de sorte que la tubulure convergeant dans un sens, juxtapose directement la tubulure de la paire adjacente et qui présente une convergence opposée.

Cependant, l'écartement entre les tubes d'une même paire ainsi que l'écartement des tubes adjacents de deux paires différents sera fonction du nombre de tubes devant équiper la tuyère et le diamètre de cette dernière. En effet, dans l'exemple illustré, ladite tuyère (1) comporte huit paires (3, ..., 10) de tubulures. Il est bien entendu évident qu'il s'agit ici d'un exemple de réalisation donné à titre d'illustration, le nombre de paires de tubulures pouvant être inférieur ou supérieur. Le nombre de paires de tubulures adjointes à la tuyère (1) sera notamment fonction de la taille du réacteur, mais également de la nuisance sonore des réacteurs.

Ainsi, afin de réduire le bruit lié aux jets propulsifs des réacteurs au moment de la phase de décollage ou de la phase d'approche de l'avion, on déclenche un soufflage d'air comprimé au travers des conduits d'amenée d'air jusqu'aux tubulures réparties au niveau de la couronne de sortie de ladite tuyère (1). La couronne concernée peut être soit celle séparant le flux chaud et le flux froid (couronne intérieure), soit celle séparant le flux froid et l'air ambiant (couronne de la nacelle du moteur). De par le positionnement des tubulures au niveau de la couronne de sortie ainsi que leur répartition, les jets d'air comprimés sont propulsés hors des tubulures selon des incidences de convergence et de pénétration, perturbant alors le jet propulsif selon des triangles d'interaction fluide dans le sens de l'écoulement.

Les jets d'air consistent en des jets contrôlés. Reliés à la partie haute pression de réacteur, leur alimentation est rendue effective uniquement dans les phases où le contrôle est nécessaire (généralement lors des phases de décollage ou d'atterrissage). En dehors de ces phases, les moyens de perturbation sont rendus entièrement inertes par simple arrêt de soufflage. L'avion ainsi équipé, ne présente aucune pénalisation en terme de traînée ou de perte de poussée.

Avantageusement, les jets d'air peuvent être opérés les uns indépendamment des autres, offrant ainsi un dispositif de perturbation du jet primaire particulièrement flexible. Selon un mode de réalisation particulier de l'invention, il pourra être actionné seulement un jet sur deux, générant de ce fait une rotation des jets propulsifs. Selon un autre mode de réalisation particulier de l'invention, il peut être également envisagé une activation partielle desdits jets : actionnement des jets positionnés sur le haut, le bas, la droite ou la gauche de ladite tuyère (1), modifiant ainsi la directivité des émissions sonores.

Selon un autre mode de réalisation, les jets de contrôle peuvent être actionnés de façon instationnaire afin de réduire les débits desdits jets de contrôle ou d'améliorer les performances dudit contrôle.

Avantageusement, le dispositif pourra être mis en place indifféremment sur l'une ou l'autre ou conjointement sur les deux faces de la couronne de sortie moteur (intérieure et extérieure), réalisant ainsi des chevrons à pénétration intérieure et/ou extérieure.

Avantageusement, dans le cas de réacteurs double-flux, le dispositif peut être mis en place sur les lèvres de sortie de la couronne entourant le jet intérieur (jet chaud) mais aussi sur la couronne constituant la partie externe entourant le jet froid (nacelle) ou en même temps sur les deux couronnes.

## Revendications

1. Réacteur d'avion comprenant une tuyère (1) éjectant un jet propulsif, ou comportant la confluence de deux jets propulsifs, ladite tuyère (1) présentant une ou deux couronnes de sortie (2), qui comportent des moyens de perturbation dudit ou desdits jets propulsifs constitués au moins d'une paire (3 à 10) de conduits (3a, 3b, ..., 10a, 10b) par lesquels sont éjectés des jets d'air, lesdits conduits (3a, 3b, ..., 10a, 10b) débouchant en sortie de ladite tuyère (1), les conduits (3a, 3b, ..., 10a, 10b) de chaque paire (3 à 10) étant disposés convergents l'un par rapport à l'autre pour générer en sortie un triangle d'interaction des jets d'air **caractérisé en ce que** les conduits (3a, 3b, ..., 10a, 10b) de chaque paire (3 à 10) convergent l'un vers l'autre en sortie de ladite tuyère (1) selon un angle de convergence compris entre 40 degrés et 70 degrés, et de préférence un angle de convergence de l'ordre de 60 degrés.

2. Réacteur d'avion selon la revendication 1, **caractérisé en ce que** les conduits (3a, 3b, ..., 10a, 10b) sont disposés au niveau de la couronne de sortie (2) pour présenter par rapport à l'axe du jet propulsif un angle de pénétration compris entre 8 degrés et 40 degrés, et de préférence un angle de pénétration de l'ordre de 20 à 35 degrés.

3. Réacteur d'avion selon l'une quelconque des revendications précédentes, **caractérisé en ce que** les moyens de perturbation comprennent 1 à 24 paires de conduits.

4. Réacteur d'avion selon l'une quelconque des revendications précédentes, **caractérisé en ce que** les paires de conduits (3a, 3b, ..., 10a, 10b) sont réparties sur la couronne de sortie (2) de sorte que le conduit convergeant dans un sens, juxtapose un conduit, de convergence opposée, de la paire de conduits adjacente.

5. Réacteur d'avion selon l'une quelconque des revendications précédentes, **caractérisé en ce que** les conduits (3a, 3b, ..., 10a, 10b) consistent en des tubulures réparties sur l'une ou les deux parois de ladite couronne de sortie (2).

6. Réacteur d'avion selon l'une quelconque des revendications précédentes, **caractérisé en ce que** les conduits (3a, 3b, ..., 10a, 10b) consistent en des canaux intégrés dans l'épaisseur de la couronne de sortie (2).

7. Réacteur d'avion selon l'une quelconque des revendications précédentes, **caractérisé en ce que** les conduits (3a, 3b, ..., 10a, 10b) sont reliés à une alimentation d'air comprimé via un conduit d'amenée d'air, l'alimentation étant réalisée de préférence au niveau de la partie haute pression dudit réacteur.

8. Réacteur d'avion selon la revendication précédente, **caractérisé en ce que** le conduit d'amenée d'air d'un conduit d'une paire constitue le conduit d'amenée du conduit de la paire adjacente et présentant une convergence opposée.

9. Réacteur d'avion selon l'une quelconque des revendications précédentes, **caractérisé en ce que** les conduits (3a, 3b, ..., 10a, 10b) présentent un diamètre de 20 à 50 fois plus petit que celui de la tuyère (1) en sortie.

10. Réacteur d'avion selon l'une quelconque des revendications précédentes, **caractérisé en ce que** les jets d'air (2) convergent par rapport à l'axe de la tuyère selon un angle compris entre 8 degrés et 40 degrés.

11. Réacteur d'avion selon l'une quelconque des revendications précédentes, **caractérisé en ce que** les jets d'air consistent en des jets d'air contrôlés.

12. Réacteur d'avion selon l'une quelconque des revendications précédentes, **caractérisé en ce que** les paires de conduits sont réparties de manière symétrique sur la couronne de sortie (2) de ladite tuyère (1).

13. Réacteur d'avion selon l'une quelconque des revendications 1 à 12, **caractérisé en ce que** les paires de conduits sont réparties de manière non symétrique sur la couronne de sortie (2) de ladite tuyère (1).

14. Réacteur d'avion selon l'une quelconque des revendications précédentes, **caractérisé en ce qu'**il comprend des moyens pour entraîner en rotation sur eux-mêmes les jets d'air éjectés par lesdits conduits.

15. Réacteur d'avion selon l'une quelconque des revendications précédentes, **caractérisé en ce que** le rapport massique entre le débit des jets d'air éjectés par lesdits conduits et celui du jet propulsif est compris entre environ 0,3% et 2%.

16. Avion comportant des réacteurs selon l'une quelconque des revendications précédentes.

## Claims

1. A jet engine comprising a nozzle (1) ejecting a propulsive jet or including the confluence of two propulsive jets, said nozzle (1) having one or two outlet rings (2) which include means for disturbing said jet or jets composed of at least one pair (3 to 10) of ducts (3a, 3b,..., 10a, 10b) through which air jets are ejected, said ducts (3a, 3b,..., 10a, 10b) opening at the outlet of said nozzle (1), the ducts (3a, 3b, 10a, 10b) of each pair (3 to 10) being convergent to one another in order to generate at the outlet a triangle of interaction of the air jet, **characterized in that** said ducts (3a, 3b,..., 10a, 10b) of each pair (3 to 10) converge towards each other at the outlet of said nozzle (1) according to a convergence angle comprised between 40 degrees and 70 degrees and preferably a convergence angle of the order of 60 degrees.

2. A jet engine according to claim 1, **characterized in that** said ducts (3a, 3b, 10a, 10b) are positioned at the level of the outlet ring (2) to have a penetration angle comprised between 8 degrees and 40 degrees, and preferably a penetration angle of the order of 20 to 35 degrees with respect to the axis of the propulsive jet.

3. A jet engine according to any one of the preceding claims, **characterized in that** said disturbance means comprise 1 to 24 pairs of ducts.

4. A jet engine according to any one of the preceding claims, **characterized in that** the pairs of ducts (3a, 3b 10a, 10b) are distributed over the outlet ring (2), so that the duct converging in one direction is positioned adjacent to a duct converging in the opposite direction of the adjacent pair of ducts.

5. A jet engine according to any one of the preceding claims, **characterized in that** the ducts (3a, 3b..., 10a, 10b) consist in tubings distributed over one or both walls of said outlet ring (2).

6. A jet engine according to any one of the preceding claims, **characterized in that** said ducts (3a, 3b..., 10a, 10b) consists in channels integrated in the thickness of the outlet ring (2).

7. A jet engine according to any one of the preceding claims, **characterized in that** said ducts (3a, 3b..., 10a, 10b) are connected to a compressed air supply through an air inlet duct, the supply being carried out preferably at the level of the high pressure part of said jet engine.

8. A jet engine according to the preceding claim, **characterized in that** said air inlet duct of one duct of a pair constitutes the inlet duct of.one duct of the adjacent pair and converging in the opposite direction.

9. A jet engine according to any one of the preceding claims, **characterized in that** the ducts (3a, 3b..., 10a, 10b) have a diameter 20 to 50 times smaller than that of the outlet nozzle (1).

10. A jet engine according to any one of the preceding claims, **characterized in that** the air jets (2) converge with respect to the nozzle axis according to one angle comprised between 8 degrees and 40 degrees.

11. A jet engine according to any one of the preceding claims, **characterized in that** the air jet consists of controlled air jets.

12. A jet engine according to any one of the preceding claims, **characterized in that** the pairs of ducts are distributed symmetrically over the outlet ring (2) of said nozzle (1).

13. A jet engine according to any one of claims 1 to 12, **characterized in that** said pairs of ducts are distributed in a non-symmetrical way over the outlet ring (2) of said nozzle (1).

14. A jet engine according to any one of the preceding claims, **characterized in that** it includes means for driving in rotation the air jets ejected by said ducts.

15. A jet engine according to any one of the preceding claims, **characterized in that** said weight ratio of the outflow of the air jets ejected by said ducts on that of the propulsive jet is comprised between approximately 0.3% and 2%.

16. An aircraft comprising jet engines according to any one of the preceding claims.

## Patentansprüche

1. Flugzeugtriebwerk, das eine Düse (1) umfaßt, die einen Treibstrahl ausstößt, oder die Mündung von zwei Treibstrahlen umfaßt, wobei die besagte Düse (1) einen oder zwei Ausgangskränze (2) aufweist, die Störungsmittel des besagten oder der besagten Treibstrahl(en) umfassen, die aus mindestens einem Paar (3 bis 10) Kanälen (3a, 3b, ... 10a, 10b) gebildet werden, aus denen Luftstrahlen ausgestoßen werden, wobei die besagten Kanäle (3a, 3b, ... 10a, 10b) zum Ausgang der besagten Düse (1) führen, wobei die Kanäle (3a, 3b, ... 10a, 10b) jedes Paares (3 bis 10) einer im Verhältnis zum anderen konvergierend angeordnet sind, um am Ausgang ein Dreieck mit Zusammenwirkung der Luftstrahlen zu bilden, **dadurch gekennzeichnet, daß** die Kanäle (3a, 3b, ... 10a, 10b) jedes Paares (3 bis 10) am Ausgang der besagten Düse (1) einer zum anderen konvergieren, und zwar in einem Konvergenzwinkel von zwischen 40 Grad und 70 Grad und bevorzugt ein Konvergenzwinkel von 60 Grad.

2. Flugzeugtriebwerk nach Anspruch 1, **dadurch gekennzeichnet, daß** die Kanäle (3a, 3b, ... 10a, 10b) auf der Höhe des Ausgangskranzes (2) angeordnet sind, um im Verhältnis zur Achse des Treibstrahls einen Eindringwinkel von zwischen 8 Grad und 40 Grad aufzuweisen und bevorzugt einen Eindringwinkel von 20 bis 35 Grad.

3. Flugzeugtriebwerk nach einem beliebigen der vorstehenden Ansprüche, **dadurch gekennzeichnet, daß** die Störungsmittel 1 bis 24 Paar Kanäle umfassen.

4. Flugzeugtriebwerk nach einem beliebigen der vorstehenden Ansprüche, **dadurch gekennzeichnet, daß** die Kanalpaare (3a, 3b, ... 10a, 10b) so auf dem Ausgangskranz (2) verteilt sind, daß der in einer Richtung konvergierende Kanal neben einem in einer anderen Richtung konvergierenden Kanal des anschließenden Kanalpaares liegt.

5. Flugzeugtriebwerk nach einem beliebigen der vorstehenden Ansprüche, **dadurch gekennzeichnet, daß** die Kanäle (3a, 3b, ... 10a, 10b) aus Stutzen bestehen, die auf einer oder den beiden Wänden des besagten Ausgangskranzes (2) verteilt sind.

6. Flugzeugtriebwerk nach einem beliebigen der vorstehenden Ansprüche, **dadurch gekennzeichnet, daß** die Kanäle (3a, 3b, ... 10a, 10b) aus in die Dicke des Ausgangskranzes (2) integrierte Kanälen bestehen.

7. Flugzeugtriebwerk nach einem beliebigen der vorstehenden Ansprüche, **dadurch gekennzeichnet, daß** die Kanäle (3a, 3b, ... 10a, 10b) mit einer Druckluftversorgung über eine Zuluftleitung verbunden sind, wobei die Versorgung bevorzugt auf der Höhe des Hochdruckteils des besagten Triebwerks ausgeführt ist.

8. Flugzeugtriebwerk nach vorstehendem Anspruch, **dadurch gekennzeichnet, daß** die Zuluftleitung eines Kanals eines Paares den Zuluftkanal des Kanals des anschließenden Paares bildet und eine entgegengesetzte Konvergenz aufweist.

9. Flugzeugtriebwerk nach einem beliebigen der vorstehenden Ansprüche, **dadurch gekennzeichnet, daß** die Kanäle (3a, 3b, ... 10a, 10b) einen Durchmesser von 1/20 bis 1/50 desjenigen der Düse (1) am Ausgang aufweisen.

10. Flugzeugtriebwerk nach einem beliebigen der vorstehenden Ansprüche, **dadurch gekennzeichnet, daß** die Luftstrahlen (2) gegenüber der Achse der Düse nach einem Winkel von zwischen 8 Grad und 40 Grad konvergieren.

11. Flugzeugtriebwerk nach einem beliebigen der vorstehenden Ansprüche, **dadurch gekennzeichnet, daß** die Luftstrahlen aus kontrollierten Luftstrahlen bestehen.

12. Flugzeugtriebwerk nach einem beliebigen der vorstehenden Ansprüche, **dadurch gekennzeichnet, daß** die Kanalpaare symmetrisch auf dem Ausgangskranz (2) der besagten Düse (1) verteilt sind.

13. Flugzeugtriebwerk nach einem beliebigen der vorstehenden Ansprüche, **dadurch gekennzeichnet, daß** die Kanalpaare nicht symmetrisch auf dem Ausgangskranz (2) der besagten Düse (1) verteilt sind.

14. Flugzeugtriebwerk nach einem beliebigen der vorstehenden Ansprüche, **dadurch gekennzeichnet, daß** es Mittel UMFAßT, mit denen die von den besagten Kanälen ausgestoßenen Luftstrahlen in Drehung um sich selbst versetzt werden.

15. Flugzeugtriebwerk nach einem beliebigen der vorstehenden Ansprüche, **dadurch gekennzeichnet, daß** das Massenverhältnis zwischen dem Durchsatz der von den besagten Kanälen ausgestoßenen Luftstrahlen und demjenigen des Treibstrahls bei zwischen circa 0,3% und 2% liegt.

16. Flugzeug mit Triebwerken nach einem beliebigen der vorstehenden Ansprüche.
